# EUROPEAN PATENT APPLICATION

(11) **EP 2 636 582 A1**
(43) Date of publication of application: **11.09.2013**
(21) Application number: 12158087.2
(22) Date of filing: 05.03.2012
(51) Int. Cl.: B62J 23/00, B62K 21/12

(54) **Protection device with aerodynamic effect to actuation lever of a motor vehicle**

(71) Applicant: Rizoma IP S.r.l., 21015 Lonate Pozzolo (Varese) (IT)
(72) Inventor: Brumana, Matteo, 21052 Busto Arsizio (Varese) (IT); Caligiuri, Marcello, 21013 Gallarate (Varese) (IT); Fanali, Fiorenzo, 21010 Ferno (Varese) (IT); Rigolio, Fabio, 21010 Ferno (Varese) (IT)
(74) Representative: Tarabbia, Luigi

(57) **Abstract**

A protection device for the ends of a handlebar (M) of a motorcycle is described, comprising: a structural member (1) having an attachment leg (2) intended to be attached to the end of said handlebar (M) and an aerodynamic appendage (3) intended to be arranged, in an operative position thereof, in front of an actuation lever (L) of said handlebar (M), said aerodynamic appendage (3) being configured so as to reduce the pressure exerted on the actuation lever (L) by the aerodynamic flow (F) due to the travel of the motorcycle, the aerodynamic appendage (3) being intended for moving away from said operative position if stressed in a direction that is opposite the direction of said aerodynamic flow (F).

## Description

### Field of Application

The present invention relates to a protection device for motorcycles, more particularly a protection device to be attached to the handlebar of a motorcycle.

### State of the Art

As is known, the front part of a motorcycle generically has a steering unit (equipped with a wheel or, as in quad bikes, two wheels) mounted rotatingly on a steering column and controlled by an upper handlebar with two lateral extensions.

The handlebar, in conditions of normal travel, is positioned orthogonally to the direction of forward movement, with the two lateral extensions which normally terminate flush with or outside of the lateral profile of the motorbike. At the end of the lateral extensions of the handlebar grips are provided for the hands and other controls essential to the working of the motorbike, such as a grip/gas lever, a clutch lever and a brake lever.

Since the ends of the handlebar constitute one of the most exposed parts of the motorcycle, both in the frontal and lateral direction, there is the need to define means of protection not only in respect of accidental falls, but also in respect of impact with other elements during normal travel.

In fact, in the event of a fall, the ends of the handlebar typically hit the ground. Without means of protection there is not only the risk of scratching or denting the end of the handlebar, but also the risk of breaking or bending the brake/clutch levers.

A partial solution to this problem is provided by removable caps (in metal or an elastic material) which can be screwed to the ends of the handlebar. In the event of a fall, they can be removed and replaced.

This solution, in some cases, does not however ensure adequate protection of the brake/clutch levers.

Furthermore, during movement of the motorcycle, it is possible for branches or other pieces of vegetation, in the case of off-road travel, to hit the ends of the handlebar, perilously becoming entangled in the brake/clutch levers or injuring the hands of the rider.

The same dynamic pressure of the air on the brake/clutch levers, in the case of high velocity road travel, can have undesirable effects on the hydraulic circuit: for example a light pressure on the brake lever may cause a minimal displacement of the brake pads which, in time, causes irregular wear of the braking system.

In the area of competitions, more particularly, it has been found that over a speed of 180 km/h the front brake lever and clutch lever are affected by dynamic air pressure that causes a pressure up to 0.7÷0.8 bar in the relative hydraulic system. This causes friction between front brake pads and disk and friction with the components of the hydraulic clutch control system.

A possible solution for these extreme cases has been found by providing milled openings in the external end portion of the levers. With these openings the functions of the lever remain unaltered but it is possible to partially reduce aerodynamic pressure.

Another solution consists of complex fairings, mounted on the handlebar and extending in front of the brake/clutch levers.

These fairings however are bulky and unsightly and above all are also subject to breaking in the event of a fall.

Furthermore, these fairings present a greater risk to the safety of the rider. Indeed, in the event of a fall his hand can get trapped inside the closed volume that they define, causing even serious injuries.

Moreover, the aforementioned fairings cannot be used in the field of competitive high speed motor sports, typically MotoGP, as they would be outside of the maximum profile prescribed by the regulations. In the field of competitive motor sports it is however important to have an effective protection also against impact, since it is not unusual for a brake lever of a motor vehicle to come into contact with a motor vehicle immediately ahead, with predictable results.

Italian patent application MI2009A000034, to the same Applicant, proposes an improved protection device which solves the aforementioned drawbacks, which is effective both in respect of accidental contact with obstacles or the ground and in the case of interference with other elements during travel (which includes air pressure).

The improved protection device is attached to the ends of the handlebar of a motorcycle, and is composed of a lateral protection rod at the end of which an aerodynamic guard is present, arranged in front of the brake actuation lever: the guard is configured so as to reduce the dynamic pressure on such a lever.

The improved protection device, although substantially meeting the requirements of the field, still has some drawbacks that to this day have not been solved.

A first drawback comes from the L-shape of the device, due to the extension of the guard with respect to the lateral protection rod. The guard thus becomes a potentially dangerous hook in the case of accidental contact with foreign bodies during a motorcycle race.

Another drawback comes from the fact that the lateral protection rod and the guard that is fixedly attached to it can represent - although to a much lesser extent with respect to the protection fairings previously used - an obstacle to the free movement of the hand of the rider in case of an accident.

A further drawback is caused by the lateral protection rod that sometimes interferes in an annoying manner with the rider's little finger , which affects driving comfort.

The technical problem forming the basis of the present invention is moreover that of offering a protection device which can overcome the aforementioned drawbacks of the prior art, in particular greatly reducing the risks related to foreign bodies getting caught in the L-shaped structure of the device.

At the same time the aim is to provide a device that is streamlined and economical, that has an aesthetic impact that is particularly pleasing and that is also effective from an aerodynamic point of view.

### Summary of the Invention

These objectives are achieved through the features mentioned in the annexed independent claims. The dependent claims describe preferred features of the present invention.

In particular, according to the invention a protection device is provided for the ends of a handlebar of a motorcycle, comprising: a structural member having an attachment leg intended to be attached to the end of said handlebar and an aerodynamic appendage intended to be arranged in its operative position in front of an actuation lever of said handlebar, said aerodynamic appendage being configured so as to reduce the pressure exerted on the actuation lever by the aerodynamic flow due to the movement of the motorcycle, and being designed so as to move from said operative position if subjected to force in a direction that is opposite the direction of said aerodynamic flow.

As previously mentioned, in the prior art there is the risk of foreign bodies getting caught in the hook-shaped configuration defined by the aerodynamic appendage. Thanks to the solution outlined above, in this case the aerodynamic appendage is arranged so as to move away from this configuration under pressure of the imprisoned body, allowing a rapid and safe release of the same.

According to a preferred application of the invention, the aerodynamic appendage is capable of moving away from its operative position since it is rotatingly mobile (preferably joined with hinging means) with respect to said attachment leg.

In this case the device comprises abutment means to prevent the rotation of the aerodynamic appendage towards the attachment leg beyond said operative position, so that the pressure of the aerodynamic flow due to the movement of the motorcycle does not modify the operative position.

According to a preferred application of the invention, the attachment leg has a shape that is not rectilinear, so that it does not interfere with a manoeuvring axis parallel to the axis of the handlebar and located between the axis of the handlebar and the aerodynamic appendage.

In particular, the attachment leg comprises a first section, intended to be fixed to an end of the handlebar, and a second section that supports the aerodynamic appendage, said first and second section defining an angle between them, preferably comprised between 120° and 160°.

The aforementioned non-rectilinear shape makes it possible to free up the space that is normally required by the hand of the rider both during normal riding manoeuvres, and in the case in which there is a sudden release of the handlebar due to an accident. It should be noted that such a configuration is particularly advantageous irrespective of the other technical features previously described.

Further features and advantages of the invention will in any case be made clearer by the following detailed description, given by way of an example and illustrated in the accompanying drawings, in which:

### Brief Description of the Drawings

- Fig. 1 is a perspective view of the device according to the invention;
- Fig. 2 is a front elevation view of the device according to the invention;

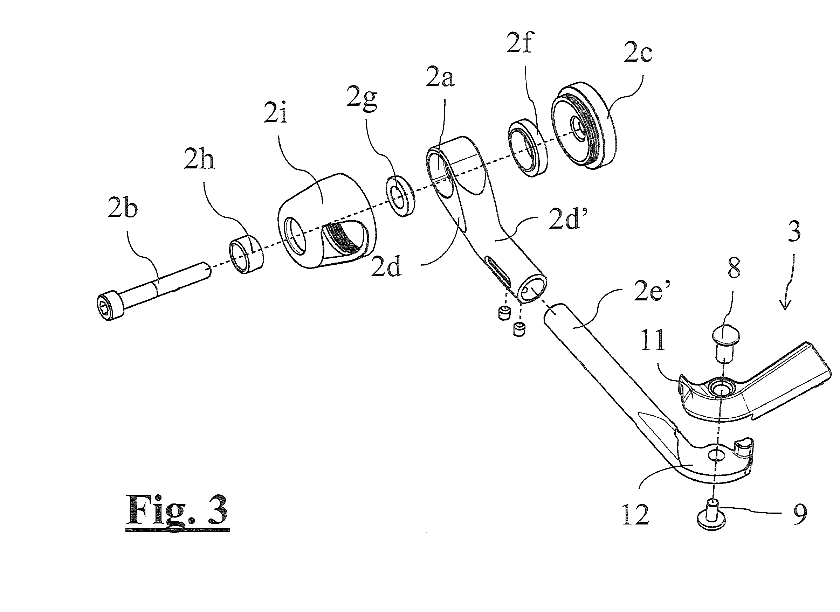

- Fig. 3 is an exploded view of the device according to the invention;
- Fig. 4 is a side elevation view of the device according to the invention;

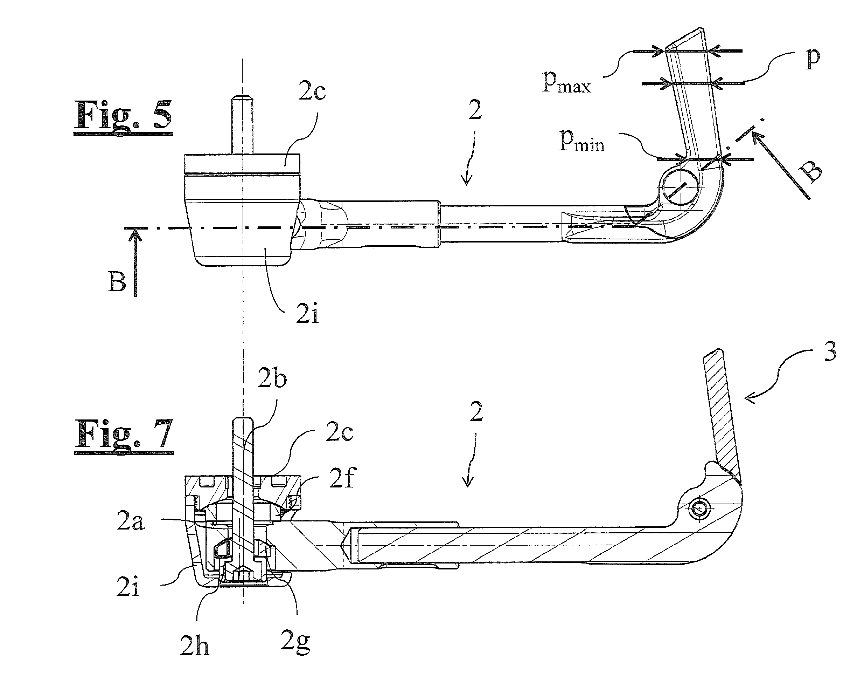

- Fig. 5 is a plan view from above of the device according to the invention;
- Fig. 6 is a sectioned view taken along the line B-B of Figure 5;
- Fig. 7 is a sectioned view taken along the line A-A of Figure 4;
- Fig. 8 is a perspective view illustrating an adjustment of the device according to the invention;

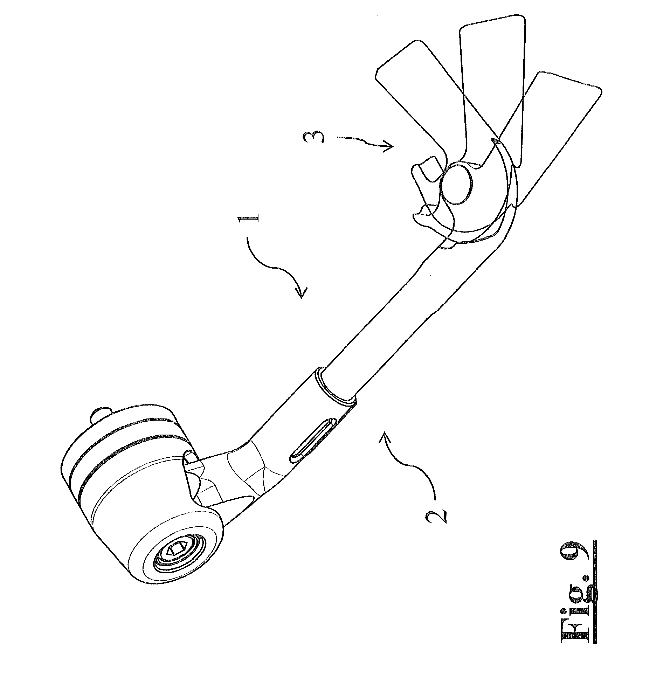

- Fig. 9 is a perspective view that illustrates the operation of the device according to the invention;
- Fig. 10 is a perspective view of the device according to the invention in an operative configuration associated with a handlebar of a motorcycle;

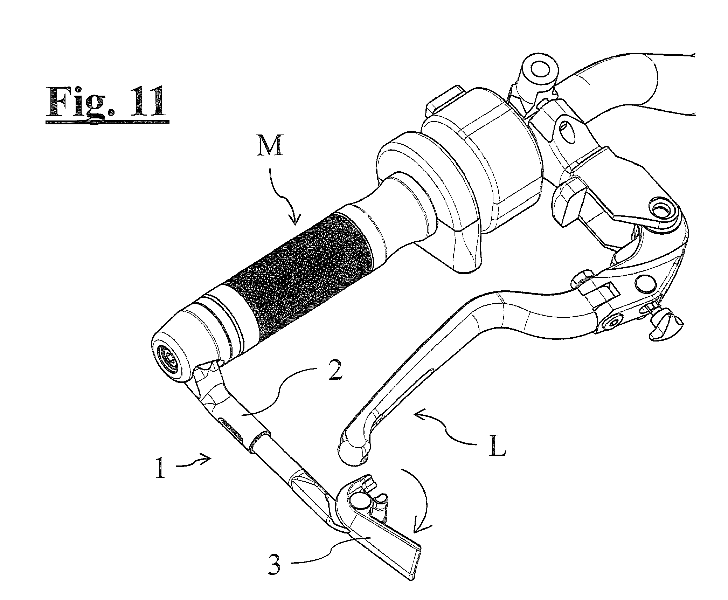

- Fig. 11 is a perspective view of the device according to the invention in an alternative configuration from that of Figure 10 associated with a handlebar of a motorcycle.

### Detailed Description

With reference to the attached figures, the device according to the invention comprises a protection member which comprises a structural member 1 composed of an attachment leg 2 and an aerodynamic appendage 3, joined to one another with a hinged constraint in the form of hinging means that are described in the following description.

The device 1 is arranged so that the attachment leg 2 can be connected to the external apex of a grip of a handlebar M of a motorcycle. The attachment leg 2 thus projects at the front along a plane that is orthogonal with respect to the axis of said handlebar; the aerodynamic appendage is hinged at its free end.

The aerodynamic appendage 3, in its operative position, is in turn orthogonal with respect to the attachment leg 2, or rather substantially parallel to the axis of the handlebar M. In this operative position, the aerodynamic appendage 3 extends from outside of the handlebar towards the inside so as to be partially arranged not only in front of the grip of the handlebar M, but also in front of the respective actuation lever L (clutch or brake). The aerodynamic appendage 3 thus defines, as shall become clearer from the rest of the description, an aerodynamic shield for protecting the lever L.

Nevertheless, since there is the hinged constraint that couples it with the attachment leg 2, the aerodynamic appendage 3 is rotatable with respect to the latter.

Abutment means, however, are present that prevent the rotation of the aerodynamic appendage 3 towards the attachment leg 2 beyond said operative position. The aerodynamic appendage 3 cannot therefore close in scissorlike fashion against the attachment leg 2, and the relative angle between the two elements is always at least equal to that of the operative position (around 90°).

On the other hand, the abutment means carry out a one-sided constraining action, and the aerodynamic appendage 3 is thus free to rotate away from the handlebar M moving away from the operative position.

The aforementioned combination of constraints ensures that the aerodynamic appendage 3 keeps its operative position when hit by the aerodynamic flow due to the movement of the motorcycle; on the other hand, it allows the displacement of the aerodynamic appendage 3 in case it is subjected to stress in the direction opposite to that due to that airflow.

In this way, it is advantageously possible for any foreign bodies caught by the hook shape formed by the aerodynamic appendage perpendicular to the attachment leg 2, to be released.

The attachment leg 2, in the illustrated embodiment, has a first rectilinear section 2d with a limited extension and a second rectilinear section 2e that is longer with respect to the first, inclined with respect to one another at an angle α comprised between 120° and 160°, preferably equal to 140°.

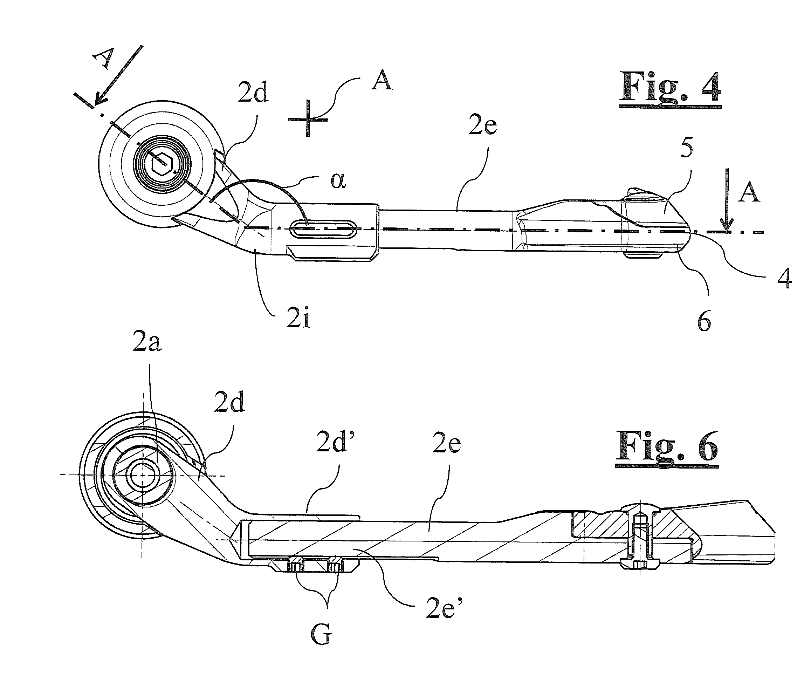

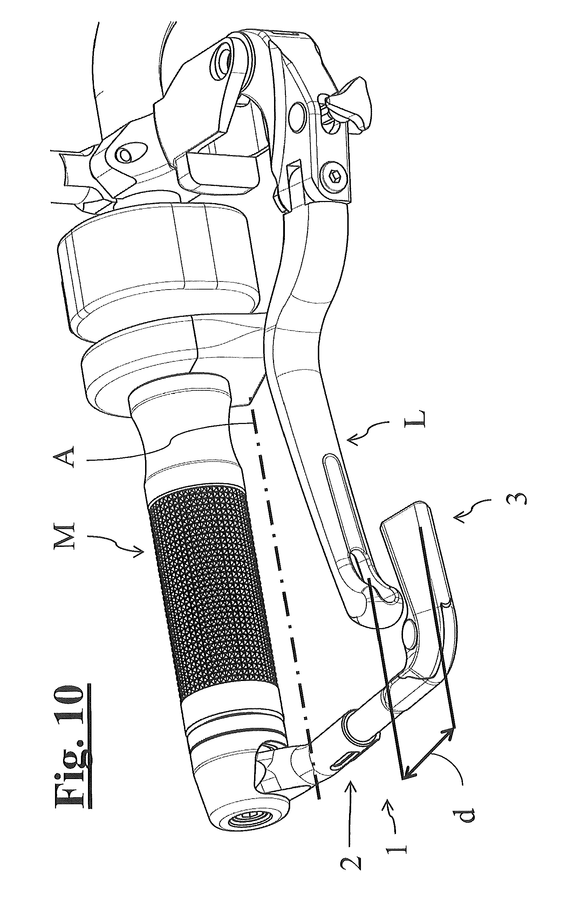

The aforementioned non-rectilinear configuration makes it possible to free up a manoeuvring axis A, identified in figs. 4 and 10, along which the hand of the rider preferably slides both during normal driving manoeuvres, and in the case of sudden release of the handlebar due to an accident.

If the attachment leg 2 were to interfere with said manoeuvring axis A, it would thus obstruct the movements of the rider in the cases mentioned; the curvature of the attachment leg thus makes it possible to advantageously avoid such a drawback.

It should be noted that the manoeuvring axis A has been identified as an axis parallel to that of the handlebar M, lying at a short distance from it on the plane that connects the axis of the handlebar to the respective actuation lever L (clutch or brake).

The first rectilinear section 2d has an enlarged free end so as to form an attachment bulb. The latter is crossed by a slot 2a, transverse to the lying plane common to the two rectilinear sections of the attachment leg 2.

In order to allow the attachment of the attachment bulb to the end part of the handlebar, the protection device comprises the attachment means described in the following description.

The attachment means firstly comprise a hex screw 2b intended to be inserted in the slot 2a of the attachment bulb to then be screwed in a longitudinal hole (not represented) foreseen at the two ends of a handlebar of a motorcycle.

The attachment means also comprise a first spacer 2c and a first bushing 2f successively interposed between the handlebar and the end of the attachment leg 2; a second bushing 2g and a third bushing 2h successively interposed between the attachment leg 2 and the head of the screw 2b.

The substantially disk-shaped spacer 2c with a central hole, serves to move the attachment point of the aerodynamic appendage 3 outwards from the handlebar; moreover, it makes it possible to define a better coupling with the grip which the end section of the handlebar is normally equipped with.

The spacer 2c has a substantially flat face suitable for fixedly coupling with the end of the grip, whereas the opposite face has a conical countersink that joins the outer circumference of the piece to its central hole. The cylindrical lateral surface of the spacer 2c has a threaded portion that is adjacent to the countersunk face; this portion has a diameter that is smaller than the remaining non-threaded portion.

The first bushing 2f has a conical face intended to match the countersunk face of the spacer. The opposite face is substantially flat if we ignore a peripheral relief surrounding the central hole. This relief is intended to engage a corresponding centring cavity that surrounds the slot 2a of the attachment leg 2.

The second bushing 2g also has a conical face, intended to engage a corresponding countersink that surrounds the slot 2a on the face opposite the centring dent. The other face of the second bushing 2g, on the other hand, is flat.

The third bushing 2h has a flat portion, arranged between the second bushing 2g and the head of the screw 2b, and a cylindrical collar that surrounds this head.

It should be noted that the screw 2b is inserted with ample clearance inside the slot 2a, the bushings 2f, 2g, 2h and the spacer 2c. The angular position of the attachment leg 2 with respect to the handlebar M of the motorcycle is therefore maintained thanks to the pressure of the screw head 2b on the system of bushings; by loosening the screw 2b it is then advantageously possible to adjust this position.

The attachment means also comprise a protection 2i, consisting of a bell that is screwed above the threaded lateral portion of the spacer 2c. The protection 2i covers the attachment bulb of the leg 2, the screw 2b and the bushings 2f, 2g, 2h, protecting them against impacts and adverse weather conditions and making the device aesthetically pleasing. The protection 2i has an end hole for accessing the head of the screw 2b and a lateral opening from which the attachment leg 2 exits.

The second rectilinear section 2e of the attachment leg 2 can be adjusted in length, so that the position of the aerodynamic leg 3 can be adapted with respect to the handlebar.

For that purpose, the attachment leg 2 is composed of two portions, one insertable into the other. In particular, the portion that constitutes the first rectilinear section 2d extends in the direction of the second rectilinear section 2e with a sleeve-like extension 2d', equipped with a longitudinal hole in which a portion in the form of a stem 2e' that defines the greater part of the second rectilinear section 2e and that supports the aerodynamic appendage 3, is able to be inserted to a greater or lesser depth.

The sleeve 2e' has, in particular on the lower side (see fig. 6), two threaded holes G in which there are a corresponding number of threaded dowels.

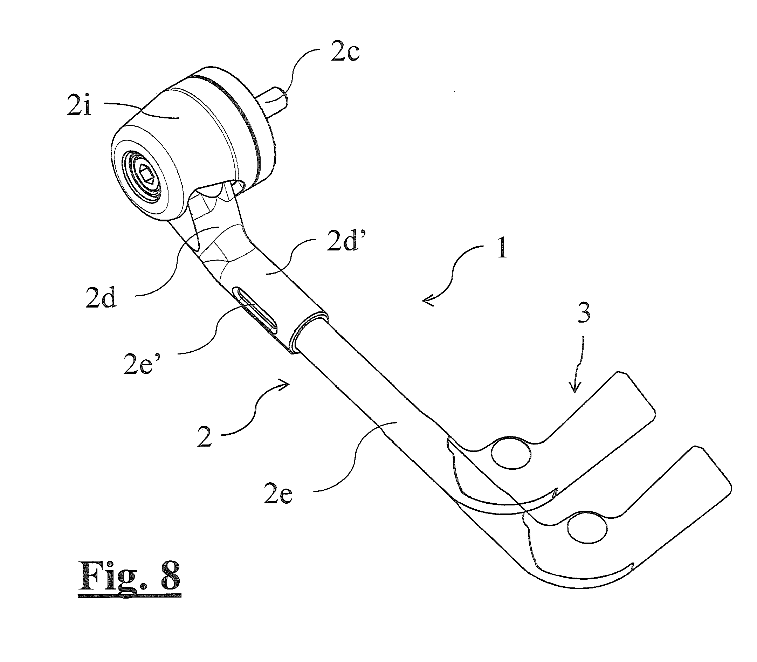

The relative position of insertion between the stem 2' and the sleeve 2a', once identified, can be maintained by blocking the threaded dowels inserted in the holes G. Doing this enables the user to perform the regulation shown in fig. 8.

The hinging means comprise a hinging portion 12 of the attachment leg 2, a hinging portion 11 of the aerodynamic appendage 3 and a pin 8, 9 that joins said portions.

In particular, the free end of the attachment leg 2, or rather of its second rectilinear section 2e, defines the hinging portion 12 arranged so as to form a hinged constraint with the corresponding hinging portion 11 of the aerodynamic appendage 3.

The two hinging portions 11, 12 are countershaped and respectively define an upper half-portion and a lower half-portion of the curved joint that joins the attachment leg 2 and the aerodynamic appendage 3 in the operative position.

This curved joint defines a substantially right angle, and it is rounded at the front so as to define a continuous aerodynamic profile with respect to the rest of the aerodynamic appendage 3.

The end surfaces of said hinging portions 11, 12 are suitably countershaped to corresponding surfaces of the attachment leg 2 and of the aerodynamic appendage 3. The countershaped surfaces are part of the abutment means previously defined: indeed in the operative position of the aerodynamic appendage 3 they abut against one another, preventing any rotation of the appendage itself in the direction of the attachment leg.

The abutment means also comprise a stop tooth 7 that emerges from the flat surface of the lower hinging portion 12. The stop tooth is arranged at the last end of such a hinging portion and acts as a stop element interfering at the rear with the aerodynamic appendage 3.

The two hinging portions 11, 12 are both perforated and passed through by the pin 8, 9, that defines the hinging axis. The pin is composed of a female part 8, structured as an internally threaded sleeve surmounted by a bulging head, and a male part 9, constituted by a hex screw with a button head which engages inside the sleeve.

The pin 8, 9 is coupled with slight interference in the holes of the hinging portions, so that stability of the operative position of the aerodynamic appendage 3 is ensured when no stress is exerted.

In an alternative embodiment, not illustrated in the present figures, it is possible to foresee elastic abutment means arranged so as to maintain the aerodynamic appendage 3 in the operative position.

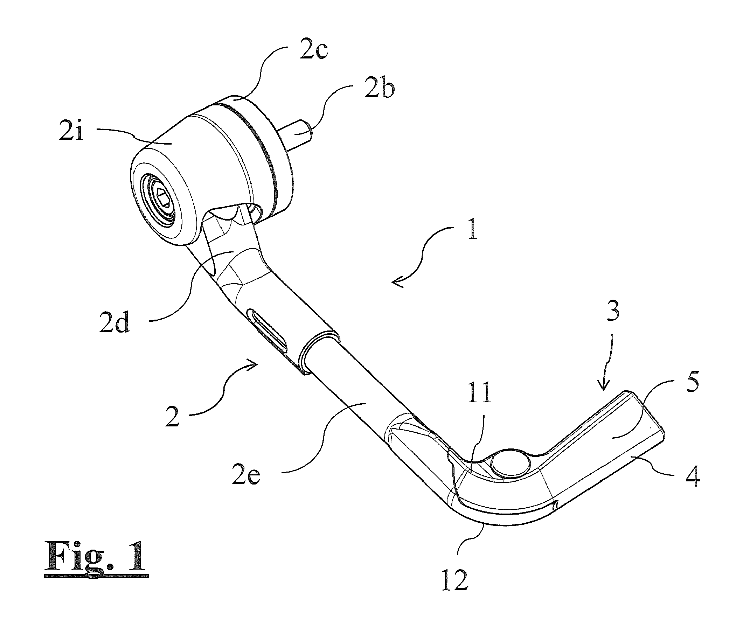

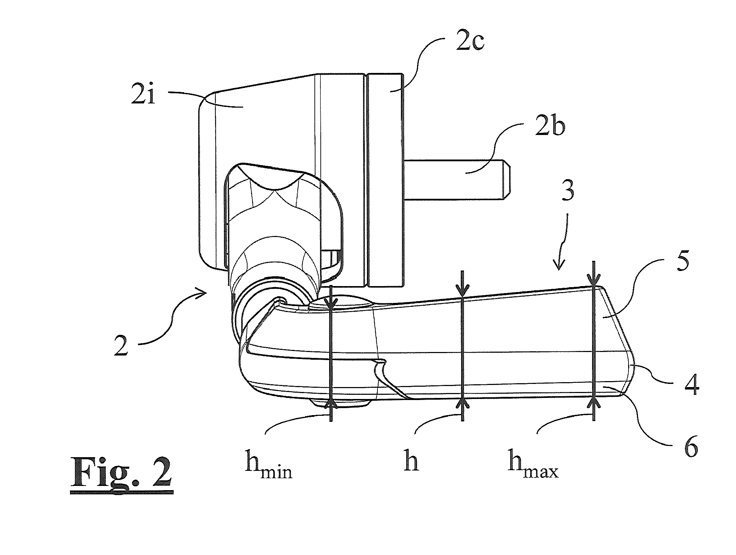

The aerodynamic appendage 3 carries an aerodynamic guard body, as can be seen in figs. 1, 2, the specific function of which is that of damping the aerodynamic drag that hits the rear actuation lever L. The guard carries out its function only when the aerodynamic appendage 3 is in the operative position.

The guard of the aerodynamic appendage 3 is in the form of a substantially triangular prismatic body. According to the preferred embodiment illustrated, the guard has a depth p (in the forward movement direction) and a height h that increase from the joint towards the free end. A front corner 4 of the guard acts as an aerodynamic leading edge, with respect to the flow that hits the moving motor vehicle. After having hit such a leading edge, the streams of airflow are divided into a part below and a part above.

As can be seen from the drawings, the triangular section of the guard is preferably not regular, instead a part 5 or band above the front corner (leading edge) is greater compared to a part 6 or band below. Better still the section of the guard increases in height only in the part above the corner, so that the corner remains defined substantially horizontal (i.e. aligned with the rear grip/actuation lever).

The internal part of the prismatic body, i.e. the downwind part, does not play a fundamental role and therefore can be flat or deeply carved, to lighten the part. It is this part that, in the operative position, abuts against the abutment tooth 7 previously defined.

Substantially, the effect that the guard is intended to produce is a vorticity of the flow that drastically reduces the dynamic drag of the airflow on the portion of the motorcycle immediately downstream thereof, i.e. on the apex of the actuation lever positioned at the ends of the handlebar.

Therefore, in order for the system to work as it should, the spacer 2c and the length regulation of the attachment leg 2 should be designed in such a way that the guard of aerodynamic appendage 3 puts at least the end portion of the actuation lever of the motorcycle "in the shade" in terms of aerodynamic drag.

According to a preferred embodiment, it was found that the most advantageous results, as a compromise between the resistance caused by the device and the beneficial effect of reduction of dynamic pressure on the lever, are obtained with a guard having a height h increasing from a height hₘᵢₙ of about 1cm to a height hₘₐₓ of about 2cm and a depth or aerodynamic chord (i.e. its dimension in the direction of the flow) p similarly increasing from a minimum value Pₘᵢₙ of about 1cm to a maximum value Pₘₐₓ of 2cm. Moreover the aerodynamic guard should preferably be positioned in front of the lever for at least 10% of its length, preferably up to 30%: this means, for a standard arrangement of grip and lever on a road motor vehicle, a length 1 of the aerodynamic leg 3 of about 5-6 cm.

The guard, moreover, must remain at a distance d from the actuation lever no greater than twice the height or depth dimension. This is obtained if necessary by acting on the regulation of the length of the attachment leg 2.

The device of the invention must be made of resistant material, since one of its primary functions is that of forming protection against contact with obstacles, withstanding as much as possible the kinetic energy also deriving from the velocity. On the other hand the aim is to supply an object that is not excessively heavy and that can be manufactured easily with the preferred aesthetic or aerodynamic lines without compromises.

In addition to a metal material, such as aluminium alloy, the Applicant has identified as a particularly preferable material POM-C, possibly reinforced with glass fibre, i.e. a synthetic resin which also has optimal weather behaviour.

As can be seen from the description given above, the device according to the invention achieves perfectly the objects disclosed in the introduction.

In fact the configuration of the device allows, on the one hand, provision of an effective protection member against accidental contacts of the most exposed parts of a motor vehicle, such as the ends of the handlebar. The sturdiness and the curvature of the device mean that, in the event of contact, it defines a sacrificial resting point of the motorcycle and absorbs the energy of the impact well without other critical parts of the motorcycle being jeopardised or preventing accidental actuation of the lever brake (which would cause the overturning of the motor vehicle).

The protection offered to the levers also guarantees safety of driving both in competitive motor sports and in case of traditional driving .

The special shape of the front surfaces makes the device aesthetically pleasing and at the same time aerodynamically effective, i.e. with low resistance yet with optimal capacity for reducing the pressure on the actuation levers.

The substantial reduction of the pressure on the levers, particularly at the end portion, ensures good working of the control system and therefore avoids overheating of the braking system.

The hinging of the guard also allows it to yield to the pressure of foreign bodies possibly caught on its inner side, allowing a rapid release of these foreign bodies.

The curvature of the attachment leg also determines a greater driving comfort and a greater safety allowing the rider to rapidly move his hands away from the handlebar.

It is in any case understood that the invention is not limited to the particular configurations illustrated above, which only constitute nonlimiting examples of the scope of the invention, but instead that numerous variants are possible, all within the possibilities of a person skilled in the art, without thereby departing from the scope of the invention itself.

## Claims

1. Protection device for the ends of a handlebar (M) of a motorcycle, comprising: a structural member (1) having an attachment leg (2) intended to be attached to the end of said handlebar (M) and an aerodynamic appendage (3) intended to be arranged in its operative position in front of an actuation lever (L) of said handlebar (M), said aerodynamic appendage (3) being configured so as to reduce the pressure exerted on the actuation lever (L) by the aerodynamic flow (F) due to the movement of the motorcycle, **characterised in that** said aerodynamic appendage (3) is designed to move away from said operative position if subjected to force in a direction that is opposite the direction of said aerodynamic flow (F).

2. Device according to claim 1, wherein said aerodynamic appendage (3) is rotatingly mobile with respect to said attachment leg (2), said device comprising abutment means to prevent the rotation of the aerodynamic appendage (3) nearer the attachment leg (2) beyond said operative position.

3. Device according to claim 2, wherein said aerodynamic appendage (3) is joined with hinging means to said attachment leg (2).

4. Device according to claim 3, wherein said abutment means comprise countershaped surfaces respectively formed on the attachment leg (2) and on the aerodynamic appendage (3).

5. Device according to claim 4, wherein said abutment means also comprise at least one stop tooth (7) that is fixedly attached to the attachment leg (2) and is intended for holding the aerodynamic appendage (3) in the operative position.

6. Device according to one of the previous claims, wherein said attachment leg (2) has a shape that is not rectilinear, so that it does not interfere with a manoeuvring axis (A) that is parallel to the axis of the handlebar (M) and that is located between the axis of the handlebar (M) and the aerodynamic appendage (3).

7. Device according to claim 6, wherein said attachment leg comprises a first section (2d), intended to be attached to one end of the handlebar (M), and a second section (2e) that supports the aerodynamic appendage (3), said first (2d) and second (2e) section defining an angle (α) between them.

8. Device according to claim 7, wherein said angle (α) is comprised between 120° and 160°.

9. Device according to one of the previous claims, comprising means (2b, 2c, 2f, 2g, 2h, 2i) for attaching the attachment leg (2) to the handlebar (M), said attachment means (2b, 2c, 2f, 2g, 2h, 2i) allowing the adjustment of the angular position of the attachment leg (2) with respect to the handlebar (M).

10. Device according to claim 9, wherein said attachment means (2b, 2c, 2f, 2g, 2h, 2i) comprise a locking screw (2b) that passes through a slot (2a) of the attachment leg (2) and that is intended to be screwed into a threaded hole formed at a lateral end of the handlebar (M).

11. Device according to claim 10, wherein said attachment means (2b, 2c, 2f, 2g, 2h, 2i) comprise a spacer (2c) intended to separate the attachment leg (2) from the ends of the handlebar (M).

12. Device according to claim 11, wherein said attachment means (2b, 2c, 2f, 2g, 2h, 2i) comprise bushings (2f, 2g) inserted between the spacer (2c) and the attachment leg (2) and between the attachment leg (2) and the screw head (2b), said bushings (2f, 2g) comprising concave surfaces destined to couple with convex surfaces of the spacer (2c) and of the attachment leg (2).

13. Device according to claim 12, wherein said attachment means (2b, 2c, 2f, 2g, 2h, 2i) comprise a protection (2i) that surrounds the screw (2a), the bushings (2f, 2g) and a part of the attachment leg (2).

14. Device according to one of the previous claims, wherein said aerodynamic appendage (3) comprises a guard in the form of a substantially triangular prismatic body.

15. Device according to claim 14, wherein the guard has a predetermined length (1) sufficient for aerodynamically covering at least the end portion of said actuation lever (L) of said handlebar (M), said length (1) preferably being between 10% and 30% of the length of the actuation lever (L).
